# EUROPÄISCHE PATENTSCHRIFT

(11) **EP 2 712 293 B1**
(45) Veröffentlichungstag und Bekanntmachung des Hinweises auf die Patenterteilung: **04.11.2015**
(21) Anmeldenummer: 13730246.9
(22) Anmeldetag: 19.06.2013
(51) Int. Cl.: A21D 13/04, A21D 2/36

(54) **BACKPRODUKT**
BAKED PRODUCT
PRODUIT DE BOULANGERIE-PÂTISSERIE

(30) Priorität: 15.08.2012 DE 102012214537
(43) Veröffentlichungstag der Anmeldung: 02.04.2014
(73) Patentinhaber: BRIU GmbH, 61462 Königstein (DE)
(72) Erfinder: ROSE, Uwe-Bernd, 61462 Königstein (DE)
(74) Vertreter: Patent- und Rechtsanwälte Ullrich & Naumann
(86) Internationale Anmeldenummer: PCT/EP2013/062754
(87) Internationale Veröffentlichungsnummer: WO 2014/026782

(56) Entgegenhaltungen:
- DE-A1- 3 915 009
- JP-A- 2008 079 606
- US-A- 4 871 574

## Beschreibung

Die Erfindung betrifft einen Teig zur Herstellung eines Backprodukts, der Mehl, Fett und Süßungsmittel enthält. Gegenstand der Erfindung ist ferner ein durch Backen dieses Teigs erhältliches Backprodukt, insbesondere ein Keks.

Backprodukte wie Kekse sind aus offenkundiger Vorbenutzung vielfach bekannt.

DE 198 30 122 A1 offenbart ein Brotrezept unter Zusatz von Topinambur, der in frischer Form als Topinambur-Gemüse, Topinambur-Sirup oder Topinambur-Schnaps zugesetzt werden soll. Der Einsatz von Topinamburmehl ist nicht offenbart.

DE 101 19 732 A1 offenbart einen Teig, der durch eine Kombination bestimmter Zutaten eine Versorgung mit essenziellen Aminosäuren bereitstellen soll. Topinambur wird als mögliche Zutat erwähnt.

DE 38 15 950 C2 offenbart ein Gebäck unter Verwendung von Topinambur. Es wird beschrieben, die Topinamburknolle zu dämpfen und zu einem Mus zu verarbeiten und dieses Mus mit Getreidemehl zu einem Teig zu vermischen.

US 3 497 360 offenbart ein Brot, das unter Zusatz von 5,7-7,5 % Topinamburmehl gebacken wird.

Der Erfindung liegt die Aufgabe zugrunde, ein Backprodukt der eingangs genannten Art zu schaffen, das auf Basis natürlicher Einsatzstoffe eine appetitzügelnde Wirkung aufweist und für den Konsumenten sensorisch und geschmacklich akzeptabel ist.

Gelöst wird diese Aufgabe bei einem Teig zur Herstellung eines Backprodukts der eingangs genannten Art dadurch, dass der Mehlanteil wenigstens 10 Gew.-% Topinamburmehl enthält, dass der Teig bezogen auf seine Gesamtmasse wenigstens 1 Gew.-% eines Geschmacksträgers zur Überdeckung des Geschmacks von Cynarin enthält, und dass es 0,5-5 Gew.-% Kieselgele oder Kieselerden enthält, wobei der Geschmacksträger zur Überdeckung des Geschmacks von Cynarin ausgewählt ist aus der Gruppe bestehend aus Fruchtsirupen, Fruchtdicksäften, Fruchtsäften und Haselnusssirup.

Ein Backprodukt ist ein verzehrfertiges gebackenes Nahrungsmittel, insbesondere ein Teiggebäck wie beispielsweise Kekse oder dergleichen. Der Begriff Mehl bezeichnet jegliche für die Herstellung von Nahrungsmitteln gebräuchliche Mehle wie beispielsweise Weizen-, Roggen- oder Dinkelmehle einschließlich des erfindungsgemäßen zugesetzten Topinamburmehls.

Fette können pflanzlichen oder tierischen Ursprungs sein, beispielhaft genannt seien Pflanzenfette, Margarine, Butter und Butterfette. Süßungsmittel können insbesondere verschiedene Zucker und Zuckerderivate oder sonstige Süßstoffe wie beispielsweise Stevia sein.

Erfindungsgemäß enthält der Mehlanteil wenigstens 10 Gew.-% Topinamburmehl. Von der Gesamtmenge des eingesetzten Mehls entfallen somit mindestens 10 Gew.-% auf das genannte Topinamburmehl. Die Topinambur-Pflanze enthält Inulin, das als appetitzügelnder Wirkstoff im Stand der Technik bekannt ist. Mittels des Topinamburmehls kann Inulin auf Basis eines natürlichen Rohstoffs in das Backprodukt eingebracht werden.

Die Erfindung hat erkannt, dass Topinamburmehl aufgrund des in der Topinamburpflanze enthaltenen Bitterstoffs Cynarin in das Backprodukt einen unerwünschten Bittergeschmack, der etwa einem Artischockengeschmack entspricht (Cynarin ist ebenfalls in Artischocken enthalten) einbringen kann.

Erfindungsgemäß ist daher vorgesehen, dass zusätzlich der Teig bezogen auf seine Gesamtmasse wenigstens 1 Gew.-% eines Geschmacksträgers zur Überdeckung des Geschmacks von Cynarin enthält. Im Kontext dieser Erfindung besitzt ein solcher Geschmacksträger die Eignung, im fertigen Backprodukt den durch Cynarin hervorgerufenen unerwünschten Artischockengeschmack mindestens so weit zu überdecken, dass er vom Konsumenten nicht mehr als unangenehm empfunden wird.

Kern der Erfindung ist es somit, in ein Backprodukt das appetitzügelnde Inulin einerseits auf Basis eines natürlichen Rohstoffs (Topinamburmehl) einzubringen und andererseits die damit verbundenen nachteiligen Folgen zum einen erkannt zu haben und zum anderen durch Zusatz eines entsprechenden Geschmacksstoffs zu kompensieren.

Der Geschmacksträger ist ausgewählt aus der Gruppe bestehend aus Fruchtsirupen, Fruchtdicksäften, Fruchtsäften und Haselnusssirup. Alle diese Geschmacksträger besitzen die Eigenschaft, dass sie einerseits den unerwünschten, durch Cynarin hervorgerufenen Geschmacksanteil des Topinamburmehls überdecken bzw. kompensieren und zum anderen vorteilhaft zum Geschmack des Backprodukts beitragen. Im Rahmen der Erfindung kann ein solcher Geschmacksträger gleichzeitig auch eine Funktion als Süßungsmittel ausüben, da Fruchtdicksäfte beispielsweise Zucker enthalten. Geeignet unter den Fruchtdicksäften und -sirupen sind beispielsweise Apfel- oder Birnendicksaft.

Der Mehlanteil enthält vorzugsweise 10 bis 40 Gew.-%, weiter 15 bis 30 Gew.-%, weiter vorzugsweise 15 bis 25 Gew.-% Topinamburmehl. Es kann so eine für die appetitzügelnde Wirkung relevante Menge Inulin in das Backprodukt eingebracht werden, auf der anderen Seite wird dessen Geschmack für den Konsumenten nicht oder allenfalls in hinnehmbarer Weise beeinträchtigt.

Bezogen auf die Gesamtmasse des Teigs kann dieser 4 bis 20 Gew.-%, weiter vorzugsweise 5 bis 15 Gew.-%, weiter vorzugsweise 6 bis 12 Gew.-% Topinamburmehl enthalten.

Der Anteil des Geschmacksträgers an der Gesamtmasse des Teigs beträgt bevorzugt 1 bis 6 Gew.-%, weiter vorzugsweise 2 bis 5 Gew.-%.

Inulin wird im Magen-Darm-Trakt der meisten Menschen nicht abgebaut. Bei etwa einem Fünftel der Menschen enthält die Darmflora jedoch Enzyme, die Inulin abbauen können. Durch diesen Abbauprozess kann es zu Blähungen kommen.

Der Teig enthält daher zusätzlich Mittel gegen Blähungen, die ausgewählt sind aus der Gruppe bestehend aus Kieselsäuren und Kieselsäurederivaten, nämlich Kieselerden oder Kieselgelen. Im Konkreten enthält der Teig 0,5 bis 5 Gew.-%, vorzugsweise 1 bis 3 Gew.-% Kieselerden oder Kieselgele.

Als Fett sind bei einem erfindungsgemäßen Backprodukt bzw. Teig zur Herstellung desselben Pflanzenfette bevorzugt. Mehl und Fett sind i. d. R. die Hauptbestandteile des Teigs, der Anteil des Mehls an der Gesamtmasse des Teigs kann erfindungsgemäß beispielsweise 30 bis 60 Gew.-%, vorzugsweise 40 bis 50 Gew.-% betragen. Der Anteil des Fetts an der Gesamtmasse des Teigs kann beispielsweise 10 bis 30 Gew.-%, weiter vorzugsweise 15 bis 30 Gew.-%, weiter vorzugsweise 20 bis 25 Gew.-% betragen.

Die Süßungsmittel können bevorzugt ausgewählt sein, bestehend aus der Gruppe aus Zuckern und anderen stark zuckerhaltigen Produkten wie beispielsweise Honig. Der Teig kann bevorzugt andere übliche Inhaltsstoffe eines Keksteigs enthalten wie beispielsweise Eier, ggf. Milch oder geringe Mengen Salz.

Gegenstand der Erfindung ist ferner ein Backprodukt, das durch Backen eines erfindungsgemäßen Teigs erhältlich ist. Es kann sich insbesondere um einen Keks handeln.

Ausführungsbeispiele der Erfindung werden nachfolgend erläutert.

### Beispiel 1:

Die folgenden Inhaltsstoffe werden zu einem Teig angerührt:
Weizenmehl 320 g
Topinamburmehl 80 g
Honig 100 g
Vanillezucker 10 g
Salz 0,5 g
Eier 2
Pflanzenfett 200 g
Milch 5 g
Kieselgel 20 g
Birnendicksaft 25 g

Aus dem so angesetzten Teig werden ungefähr 50 Kekse hergestellt und gebacken.

### Beispiel 2:

Der Teig des Beispiels 1 wird mit den gleichen Inhaltsstoffen angesetzt, zusätzlich werden 10 g Cacao als weiterer Geschmacksträger hinzugegeben.

### Beispiel 3:

Der Teig des Beispiels 1 wird mit den gleichen Inhaltsstoffen und zusätzlich 10 g Zimtpulver angesetzt.

### Beispiel 4:

### Durchführung eines Score-Tests

Die nach Beispiel 1 gebackenen Kekse werden 10 Testpersonen angeboten und verschiedene sensorische und den Appetit beeinflussende Eigenschaften mit einem Fragebogen abgefragt.

Der Score-Test zeigte die folgenden Ergebnisse:
1. Sensorik

| | Sehr gut | annehmbar | neutral | mäßig | mangelhaft |
|---|---|---|---|---|---|
| Aussehen | **1** | **8** | | **1** | |
| Geruch | **6** | **3** | **1** | | |
| Geschmack | **2** | **4** | **4** | **1** | |
| Konsistenz | **5** | **3** | **1** | | |
| Gesamteindruck | **3** | **6** | **1** | | |

2. Effekt

| | ja | nein | weiß nicht |
|---|---|---|---|
| Hatte der Verzehr Einfluss auf ihren Appetit? | **8** | **1** | **1** |
| Hatten Sie negative Begleiterscheinungen? | **1** | **9** | |
| Hatte der Verzehr Einfluss auf Ihr sonstiges Essverhalten? | **5** | **4** | **1** |
| Hatte die Verzehrmenge Einfluss auf Ihr Befinden? | **2** | **7** | **1** |

3. Gesamtbeurteilung

| | ja | nein | weiß nicht |
|---|---|---|---|
| Macht das Produkt einen positiven Eindruck auf Sie als Verbraucher? | **9** | | **1** |
| Würden Sie ein solches Produkt kaufen? | **5** | **2** | **3** |

Man erkennt aus dem Score-Test, dass der erfindungsgemäße Keks sensorisch weit überwiegend positiv beurteilt wird und dass 8 von 10 Testpersonen einen Einfluss auf ihren Appetit wahrgenommen haben.

## Patentansprüche

1. Teig zur Herstellung eines Backprodukts, der enthält:
- Mehl,
- Fett,
- Süßungsmittel,
**dadurch gekennzeichnet, dass** der Mehlanteil wenigstens 10 Gew.-% Topinamburmehl enthält, dass der Teig bezogen auf seine Gesamtmasse enthält:
a. wenigstens 1 Gew.-% eines Geschmacksträgers zur Überdeckung des Geschmacks von Cynarin,
b. 0,5-5 Gew.-% Kieselgele oder Kieselerden, wobei der Geschmacksträger zur Überdeckung des Geschmacks von Cynarin ausgewählt ist aus der Gruppe bestehend aus Fruchtsirupen, Fruchtdicksäften, Fruchtsäften und Haselnusssirup.

2. Teig nach Anspruch 1, **dadurch gekennzeichnet, dass** der Mehlanteil 10 bis 40 Gew.-%, vorzugsweise 15 bis 30 Gew.-%, weiter vorzugsweise 15 bis 25 Gew.-% Topinamburmehl enthält.

3. Teig nach Anspruch 1 oder 2, **dadurch gekennzeichnet, dass** er bezogen auf seine Gesamtmasse 4 bis 20 Gew.-%, vorzugsweise 5 bis 15 Gew.-%, weiter vorzugsweise 6 bis 12 Gew.-% Topinamburmehl enthält.

4. Teig nach einem der Ansprüche 1 bis 3, **dadurch gekennzeichnet, dass** er 1 bis 6 Gew.-%, vorzugsweise 2 bis 5 Gew.-% eines Geschmacksträgers zur Überdeckung des Geschmacks von Cynarin enthält.

5. Teig nach einem der Ansprüche 1 bis 4, **dadurch gekennzeichnet, dass** er 1 bis 3 Gew.-% Kieselerden oder Kieselgele enthält.

6. Teig nach einem der Ansprüche 1 bis 5, **dadurch gekennzeichnet, dass** er Pflanzenfett enthält.

7. Teig nach einem der Ansprüche 1 bis 6, **dadurch gekennzeichnet, dass** die Süßungsmittel ausgewählt sind aus der Gruppe bestehend aus Zuckern und Honig.

8. Teig nach einem der Ansprüche 1 bis 7, **dadurch gekennzeichnet, dass** er zusätzlich Eier und/oder Milch enthält.

9. Backprodukt, erhältlich durch Backen eines Teigs nach einem der Ansprüche 1 bis 8.

10. Backprodukt nach Anspruch 9, **dadurch gekennzeichnet, dass** es ein Keks ist.

## Claims

1. Dough for producing a baked product which contains:
- flour,
- fat,
- sweetener,
**characterised in that** the flour proportion contains at least 10% by weight of Jerusalem artichoke flour, **in that** the dough contains with respect to the total mass thereof:
a. at least 1% by weight of a flavour carrier for masking the taste of cynarine,
b. from 0.5 to 5% by weight of silica gels or siliceous earths, wherein the flavour carrier for masking the taste of cynarine is selected from the group comprising fruit syrups, thick fruit juices, fruit juices and hazelnut syrup.

2. Dough according to claim 1, **characterised in that** the flour proportion contains from 10 to 40% by weight, preferably from 15 to 30% by weight, more preferably from 15 to 25% by weight of Jerusalem artichoke flour.

3. Dough according to claim 1 or claim 2, **characterised in that** it contains, with respect to the total mass thereof, from 4 to 20% by weight, preferably from 5 to 15% by weight, more preferably from 6 to 12% by weight of Jerusalem artichoke flour.

4. Dough according to any one of claims 1 to 3, **characterised in that** it contains from 1 to 6% by weight, preferably from 2 to 5% by weight of a flavour carrier for masking the flavour of cynarine.

5. Dough according to any one of claims 1 to 4, **characterised in that** it contains from 1 to 3% by weight of siliceous earths or silica gels.

6. Dough according to any one of claims 1 to 5, **characterised in that** it contains vegetable fat.

7. Dough according to any one of claims 1 to 6, **characterised in that** the sweeteners are selected from the group comprising sugars and honey.

8. Dough according to any one of claims 1 to 7, **characterised in that** it additionally contains eggs and/or milk.

9. Baked product which can be obtained by baking a dough according to any one of claims 1 to 8.

10. Baked produced according to claim 9, **characterised in that** it is a biscuit.

## Revendications

1. Pâte pour la fabrication d'un produit de boulangerie-pâtisserie, qui contient :
- de la farine,
- une matière grasse,
- un édulcorant,
**caractérisée en ce que** la proportion de farine est d'au moins 10 % en poids de farine de topinambour, la pâte contenant, par rapport à sa masse totale :
a. au moins 1 % en poids d'un vecteur de goût destiné à couvrir le goût de la cynarine,
b. 0,5 à 5 % en poids de gels de silice ou de silices, le vecteur de goût destiné à couvrir le goût de la cynarine étant choisi dans le groupe consistant en les sirops de fruits, les concentrés de jus de fruits, les jus de fruits et le sirop de noisette.

2. Pâte selon la revendication 1, **caractérisée en ce que** la proportion de farine est de 10 à 40 % en poids, de préférence de 15 à 30 % en poids, d'une manière plus préférée de 15 à 25 % en poids de farine de topinambour.

3. Pâte selon la revendication 1 ou 2, **caractérisée en ce qu'**elle contient, par rapport à sa masse totale, 4 à 20 % en poids, de préférence 5 à 15 % en poids, d'une manière plus préférée de 6 à 12 % en poids de farine de topinambour.

4. Pâte selon l'une des revendications 1 à 3, **caractérisée en ce qu'**elle contient 1 à 6 % en poids, de préférence 2 à 5 % en poids d'un vecteur de goût destiné à couvrir le goût de la cynarine.

5. Pâte selon l'une des revendications 1 à 4, **caractérisée en ce qu'**elle contient 1 à 3 % en poids de silices ou de gels de silice.

6. Pâte selon l'une des revendications 1 à 5, **caractérisée en ce qu'**elle contient une matière grasse de plante.

7. Pâte selon l'une des revendications 1 à 6, **caractérisée en ce que** l'édulcorant est choisi dans le groupe constitué des sucres et du miel.

8. Pâte selon l'une des revendications 1 à 7, **caractérisée en ce qu'**elle contient en outre des oeufs et/ou du lait.

9. Produit de boulangerie-pâtisserie, pouvant être obtenu par cuisson d'une pâte selon l'une des revendications 1 à 8.

10. Produit de boulangerie-pâtisserie selon la revendication 9, **caractérisé en ce qu'**il s'agit d'un biscuit.
